# EUROPÄISCHE PATENTANMELDUNG

(11) **EP 3 075 707 A1**
(43) Veröffentlichungstag der Anmeldung: **05.10.2016**
(21) Anmeldenummer: 15162421.0
(22) Anmeldetag: 02.04.2015
(51) Int. Cl.: C01B 33/107, B01J 8/06, B01J 12/00, B01J 19/02, B01J 19/24

(54) **VERFAHREN ZUR HYDRIERUNG VON SILICIUMTETRACHLORID ZU TRICHLORSILAN DURCH EIN GASGEMISCH VON WASSERSTOFF UND CHLORWASSERSTOFF**

(71) Anmelder: Evonik Degussa GmbH, 45128 Essen (DE)
(72) Erfinder: DÖRING, Dr. Jens, 44141 Dortmund (DE); LUNT-RIEG, Ingrid, 61352 Bad Homburg (DE); PAULI, Dr. Ingo, 61839 Schmitten (DE); SCHLADERBECK, Dr. Norbert, 65779 Kelkheim (DE); SAUER, Dr. Jörg, 76135 Karlsruhe (DE)

(57) **Zusammenfassung**

Die Erfindung betrifft ein Verfahren zur Umsetzung von Siliciumtetrachlorid mit Wasserstoff zu Trichlorsilan in einem Hydrodechlorierungsreaktor (3), wobei der Hydrodechlorierungsreaktor (3) unter Druck betrieben wird und ein oder mehrere Reaktorrohre (3a, 3b, 3c) aus keramischem Material umfasst, und der wasserstoffhaltige Eduktstrom (2) am Eingang des Reaktors Chlorwasserstoff aufweist.

## Beschreibung

Die Erfindung betrifft ein Verfahren zur Umsetzung von Siliciumtetrachlorid mit Wasserstoff zu Trichlorsilan in einem Hydrodechlorierungsreaktor, wobei der Hydrodechlorierungsreaktor unter Druck betrieben wird und ein oder mehrere Reaktorrohre umfasst, die aus keramischem Material bestehen. Die Erfindung betrifft des Weiteren die Verwendung eines solchen Hydrodechlorierungsreaktors als integraler Bestandteil einer Anlage zur Herstellung von Trichlorsilan aus metallurgischem Silicium.

Bei vielen technischen Prozessen in der Siliciumchemie entstehen SiCl₄ und HSiCl₃ gemeinsam. Es ist deswegen notwendig, diese beiden Produkte ineinander zu überführen und damit der jeweiligen Nachfrage nach einem der Produkte gerecht zu werden.

Darüber hinaus ist hochreines HSiCl₃ ein wichtiger Einsatzstoff bei der Herstellung von Solarsilicium.

Bei der Hydrodechlorierung von Siliciumtetrachlorid (STC) zu Trichlorsilan (TCS) wird nach technischem Standard ein thermisch kontrolliertes Verfahren eingesetzt, bei dem das STC zusammen mit Wasserstoff in einem mit Graphit ausgekleideten Reaktor, dem so genannten "Siemensofen", geleitet wird. Die im Reaktor befindlichen Graphitstäbe werden als Widerstandsheizung betrieben, so dass Temperaturen von 1.100 °C und höher erreicht werden. Durch die hohe Temperatur und den anteiligen Wasserstoffgehalt wird die Gleichgewichtslage zum Produkt TCS verschoben. Das Produktgemisch wird nach der Reaktion aus dem Reaktor geführt und in aufwendigen Verfahren abgetrennt. Der Reaktor wird kontinuierlich durchströmt, wobei die Innenflächen des Reaktors aus Graphit als korrosionsfestes Material bestehen müssen. Zur Stabilisierung wird eine Außenhülle aus Metall eingesetzt. Die Außenwand des Reaktors muss gekühlt werden, um die bei den hohen Temperaturen auftretenden Zersetzungsreaktionen an der heißen Reaktorwand, die zu Siliciumabscheidungen führen können, möglichst zu unterdrücken.

Neben der nachteiligen Zersetzung aufgrund der notwendigen und unökonomischen sehr hohen Temperatur ist auch die regelmäßige Reinigung des Reaktors nachteilig. Aufgrund der eingeschränkten Reaktorgröße muss eine Reihe von unabhängigen Reaktoren betrieben werden, was ökonomisch ebenfalls nachteilig ist. Die gegenwärtige Technologie erlaubt keinen Betrieb unter Druck, um eine höhere Raum-/Zeitausbeute zu erzielen, um somit beispielsweise die Anzahl der Reaktoren zu reduzieren.

Ein weiterer Nachteil ist die Durchführung einer rein thermisch geführten Reaktion, ohne einen Katalysator, der das Verfahren insgesamt sehr ineffizient gestaltet.

Aufgabe der vorliegenden Erfindung war es nun, ein Verfahren zur Umsetzung von Siliciumtetrachlorid mit Wasserstoff zu Trichlorsilan bereitzustellen, welches effizienter arbeitet und mit dem bei vergleichbarer Reaktorgröße ein höherer Umsatz erzielt werden kann, also die Raum-/Zeitausbeute an TCS erhöht wird. Des Weiteren soll das erfindungsgemäße Verfahren eine hohe Selektivität bezüglich TCS ermöglichen.

Zur Lösung des Problems wurde gefunden, dass ein Gemisch aus STC und Wasserstoff durch einen druckbetriebenen röhrenartigen Reaktor geführt werden kann, der vorzugsweise einerseits mit einer katalytischen Wandbeschichtung versehen und andererseits mit einem Festbettkatalysator ausgestattet sein kann. Das Rohr oder die Rohre des Reaktors ist oder sind aus keramischem Material.

Die Kombination aus der Verwendung eines Katalysators zur Verbesserung der Reaktionskinetik und Steigerung der Selektivität sowie eine druckbetriebene Reaktion steigern überraschend die Effizienz der Prozessführung, denn in dem Verfahren werden durch Einstellung der Reaktionsparameter Druck, Verweilzeit, Verhältnis aus Wasserstoff zu STC hohe Raum-/Zeitausbeuten an TCS mit einer hohen Selektivität erbracht.

Mit dem Verfahren, das in PCT/EP/2010069799 vorgestellt ist, wird ein Produktgas erhalten, das neben nicht umgesetztem Wasserstoff auch Chlorwasserstoff aufweist.

Will man den Wasserstoff als Rückstrom in die Umsetzung zurückführen, um Ressourcen zu schonen, trennt man üblicherweise den Chlorwasserstoff vorher ab, um das Material des Hydrierreaktors zu schonen.

Werden jedoch, wie in der vorliegenden Erfindung, ein oder mehrere Reaktorrohre aus keramischem Material eingesetzt, muss weit weniger Chlorwasserstoff aus dem Produktstrom abgetrennt werden, als bislang üblich, da das keramische Material aggressive Halogenwasserstoffe toleriert. Zieht man aus dem Rückstrom weniger Chlorwasserstoff ab, verschiebt sich natürlich das thermodynamische Gleichgewicht zu geringeren Ausbeuten von Trichlorsilan hin. So führt beispielsweise ein zusätzliches Molprozent Chlorwasserstoff im Wasserstoff führenden Rückstrom am Eingang des Reaktors zu einer Verringerung des thermodynamischen Gleichgewichtsumsatzes bei 950 °C von etwa 25,6 % auf etwa 24 %.

Ein geringerer Aufwand, Chlorwasserstoff aus dem Rückstrom zu entfernen, zieht also einen erhöhten Aufwand, gleichbedeutend mit einem Mehraufwand nach sich, um das dann geringer konzentrierte Trichlorsilan aus dem Produktstrom zu gewinnen.

Es ist das Überraschende des folgend geschilderten Verfahrens, dass der Mehraufwand für die Gewinnung von Trichlorsilan durch den verringerten Aufwand bei der Trennung des Chlorwasserstoff-Wasserstoff-Gemisches überkompensiert wird.

Gegenstand der Erfindung ist ein Verfahren zur Umsetzung von Siliciumtetrachlorid mit Wasserstoff zu Trichlorsilan in einem Hydrodechlorierungsreaktor (3), wobei der Hydrodechlorierungsreaktor (3) unter Druck betrieben wird und ein oder mehrere Reaktorrohre (3a, 3b, 3c) umfasst, die aus keramischem Material bestehen, und der wasserstoffhaltige Eduktstrom (2) am Eingang des Reaktors Chlorwasserstoff aufweist, welches dadurch gekennzeichnet ist, dass in dem Reaktor (3) eine Temperatur von 700 bis 1000 °C bei einem Druck von 1 bis 10 bar eingestellt und in dem Eduktstrom (2) Chlorwasserstoff in einem Anteil von 0,01 bis 5,0 Mol-% eingesetzt wird, wobei der Anteil Chlorwasserstoff auf die Anteile Chlorwasserstoff und Wasserstoff im Eduktstrom (2) bezogen wird, deren Summe 100 Mol-% ist.

Das Verfahren hat ebenfalls den Vorteil, dass der Einsatz keramischer Reaktorrohre in Verbindung mit einer höheren Konzentration an Chlorwasserstoff im Rückstrom die Energieeffizienz verbessert.

Die Ermittlung des Energieeinsatzes, um Chlorwasserstoff aus dem Eduktstrom zu entfernen und um mit dem verbleibenden Wasserstoff Eduktstrom im Reaktor die Umsetzung zu STC zu TCS in einer Gleichgewichtsreaktion umzusetzen, ist dem Fachmann zugänglich.

Das erfindungsgemäße Verfahren liefert bei einem Anteil von 1 Mol-% Chlorwasserstoff im Eduktstrom (2) einen Umsatz zu TCS von 24 %. Um diesen Gehalt an TCS auf den Wert von 25,6 % zu erhöhen, den man beim thermodynamischen Gleichgewichtsumsatz erhielte, ist bei ansonsten gleicher Temperatur und gleichem Druck im Reaktor für die Trennung des TCS aus dem Produktstrom ein geringerer Energieeinsatz erforderlich, als in dem Verfahren gemäß PCT/EP/2010069799.

Das erfindungsgemäße Verfahren wird im Folgenden näher beschrieben einschließlich verschiedener oder bevorzugter Ausführungsvarianten.

Die Nutzung eines geeigneten Katalysators in Verbindung mit Druck stellt eine Option des Verfahrens dar, da so schon bei vergleichsweise niedrigen Temperaturen von deutlich unter 1.000 °C, bevorzugt unterhalb 950 °C ausreichend hohe Mengen an TCS erzeugt werden können, ohne dass nennenswerte Verluste durch die thermische Zersetzung in Kauf genommen werden müssten.

Für die Reaktionsröhren des Reaktors können bestimmte keramischen Materialien verwendet werden, da sie ausreichend inert sind und auch bei hohen Temperaturen wie z. B. 1.000 °C die Druckfestigkeit des Reaktors gewährleisten, ohne dass das keramische Material beispielsweise eine Phasenumwandlung durchläuft, die das Gefüge schädigen und somit die mechanische Belastbarkeit negativ beeinträchtigen würde. Hierbei ist es notwendig, gasdichte Rohre einzusetzen. Die Gasdichtigkeit und Inertheit kann durch hochtemperaturfeste Keramiken erreicht werden, die unten näher spezifiziert werden.

Das Reaktorrohrmaterial kann mit einer katalytisch aktiven Innenbeschichtung versehen werden. Als zusätzliche Maßnahme kann das Reaktorrohr mit einem inerten Schüttgut befüllt werden, um die Strömungsdynamik zu optimieren. Das Schüttgut kann dabei aus dem gleichen Material bestehen wie das Reaktormaterial. Als Schüttgut können Füllkörper, wie Ringe, Kugeln, Stäbchen, oder andere geeignete Füllkörper verwendet werden. Die Füllkörper können in einer besonderen Ausführungsform zusätzlich mit einer katalytisch aktiven Beschichtung belegt sein. In diesem Fall kann gegebenenfalls auf die katalytisch aktive Innenbeschichtung verzichtet werden.

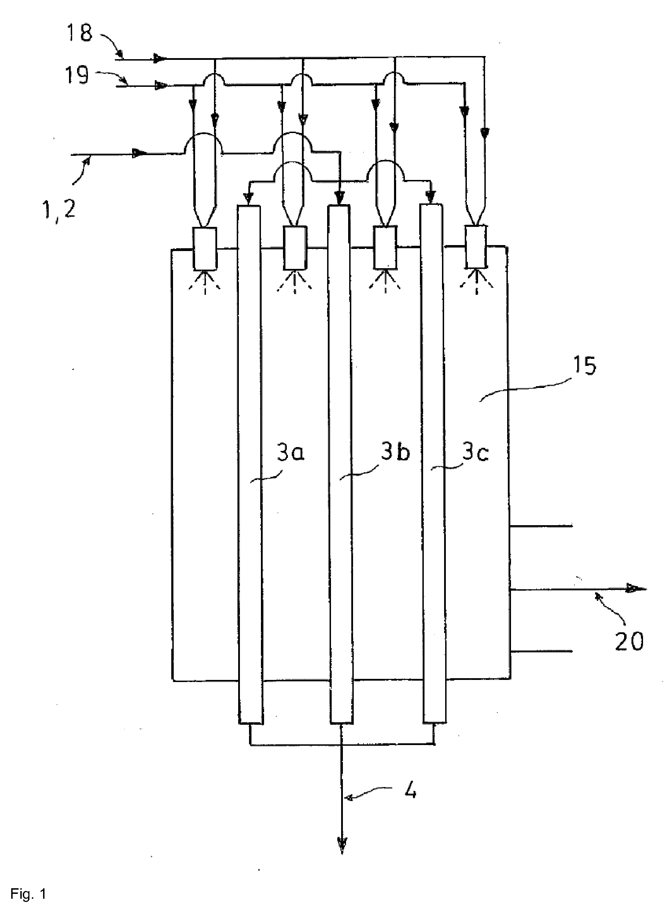

Die Dimensionierung des Reaktorrohres und das Design des kompletten Reaktors werden durch die Verfügbarkeit der Rohrgeometrie bestimmt, sowie durch die Vorgaben bezüglich der Einbringung der für die Reaktionsführung benötigten Wärme. Dabei kann sowohl ein einzelnes Reaktionsrohr mit der dazu gehörigen Peripherie eingesetzt werden als auch eine Kombination von vielen Reaktorrohren. Im letzten Fall kann die Anordnung vieler Reaktorrohre in einer beheizten Kammer sinnvoll sein, bei der die Wärmemenge beispielsweise durch Erdgasbrenner eingebracht wird. Um eine lokale Temperaturspitze an den Reaktorrohren zu vermeiden, sollten die Brenner nicht direkt auf die Rohre gerichtet sein. Sie können beispielsweise indirekt von oben in den Reaktorraum ausgerichtet und über den Reaktorraum verteilt sein, so wie in Figur 1 exemplarisch gezeigt. Zur Steigerung der Energieeffizienz kann das Reaktorsystem an ein Wärmerückgewinnungssystem angebunden werden.

Im Produktstrom des erfindungsgemäßen Verfahrens können Nebenprodukte wie Dichlorsilan, Monochlorsilan und/oder Silan enthalten sein. Im Produktstrom sind in der Regel auch noch nicht umgesetzte Edukte, also Siliciumtetrachlorid und Wasserstoff, enthalten.

Die Umsetzung im Hydrodechlorierungsreaktor wird typischerweise bei 700 °C bis 1.000 °C, bevorzugt bei 850 °C bis 950 °C, und bei einem Druck im Bereich zwischen 1 und 10 bar, bevorzugt zwischen 3 und 8 bar, besonders bevorzugt zwischen 4 und 6 bar, durchgeführt.

In allen beschriebenen Varianten des erfindungsgemäßen Verfahrens können das siliciumtetrachloridhaltige, chlorwasserstoffhaltige und wasserstoffhaltige Eduktgas auch als ein gemeinsamer Strom in den druckbetriebenen Hydrodechlorierungsreaktor geführt werden.

Das keramische Material für die ein oder mehreren Reaktorrohre wird vorzugsweise ausgewählt aus Al₂O₃, AlN, Si₃N₄ oder SiCN, besonders bevorzugt ausgewählt aus Si-infiltriertem SiC, isostatisch gepresstem SiC, heiß isostatisch gepresstem SiC oder drucklos gesintertem SiC (SSiC).

Vor allem Reaktoren mit SiC-haltigen Reaktorrohren werden bevorzugt, da sie über eine besonders gute Wärmeleitfähigkeit verfügen, die eine gleichmäßige Wärmeverteilung und einen guten Wärmeeintrag für die Reaktion ermöglichen, und weil sie gasdicht sind. Besonders bevorzugt ist es, wenn die ein oder mehreren Reaktorrohre aus drucklos gesintertem SiC (SSiC) bestehen.

Erfindungsgemäß ist vorgesehen, dass das siliciumtetrachloridhaltige Eduktgas und/oder das wasserstoffhaltige Eduktgas vorzugsweise mit einem Druck im Bereich von 1 bis 10 bar, bevorzugt im Bereich von 3 bis 8 bar, besonders bevorzugt im Bereich von 4 bis 6 bar, und mit einer Temperatur im Bereich von 700 °C bis 1000 °C, bevorzugt im Bereich von 800 °C bis 950 °C, in den Hydrodechlorierungsreaktor geführt wird.

Die Wärmezufuhr für die Reaktion in dem Hydrodechlorierungsreaktor kann über einen Heizraum, in dem die ein oder mehreren Reaktorrohre angeordnet sind, erfolgt. Beispielsweise kann der Heizraum durch eine elektrische Widerstandsheizung erhitzt werden. Der Heizraum kann auch eine Brennkammer sein, die mit Brenngas und Brennluft betrieben wird.

Es kann vorteilhaft sein, die Umsetzung in dem Hydrodechlorierungsreaktor durch eine die Umsetzung katalysierende Innenbeschichtung der ein oder mehreren Reaktorrohre zu katalysieren. Die Umsetzung in dem Hydrodechlorierungsreaktor kann zusätzlich durch eine die Umsetzung katalysierende Beschichtung eines im Reaktor bzw. in den ein oder mehreren Reaktorrohren angeordneten Festbettes katalysiert werden. Bei Verwendung eines katalytisch aktiven Festbettes kann gegebenenfalls auf die katalytisch aktive Innenbeschichtung verzichtet werden. Bevorzugt ist jedoch, dass die Reaktorinnenwand mit einbezogen wird, da so die katalytisch nutzbare Oberfläche gegenüber rein geträgerten Katalysatorsystemen (z. B. per Festbett), vergrößert wird.

Die katalytisch aktive(n) Beschichtung(en), also für die Reaktorinnenwand und/oder ein gegebenenfalls verwendetes Festbett, bestehen bevorzugt aus einer Zusammensetzung, die mindestens eine aktive Komponente enthält ausgewählt aus den Metallen Ti, Zr, Hf, Ni, Pd, Pt, Mo, W, Nb, Ta, Ba, Sr, Ca, Mg, Ru, Rh, Ir oder Kombinationen daraus oder deren Silicidverbindungen, insbesondere Pt, Pt/Pd, Pt/Rh sowie Pt/Ir.

Die Reaktorinnenwand und/oder das gegebenenfalls verwendete Festbett können wie folgt mit der katalytisch aktiven Beschichtung versehen werden:
Durch Bereitstellen einer Suspension, nachfolgend auch als Lack bzw. Paste bezeichnet, enthaltend a) mindestens eine aktive Komponente ausgewählt aus den Metallen Ti, Zr, Hf, Ni, Pd, Pt, Mo, W, Nb, Ta, Ba, Sr, Ca, Mg, Ru, Rh, Ir oder Kombinationen daraus oder deren Silicidverbindungen, b) mindestens ein Suspensionsmittel, und optional c) mindestens eine Hilfskomponente, insbesondere zur Stabilisierung der Suspension, zur Verbesserung der Lagerstabilität der Suspension, zur Verbesserung der Haftung der Suspension auf der zu beschichtenden Oberfläche und/oder zur Verbesserung des Auftragens der Suspension auf die zu beschichtende Oberfläche; durch Auftragen der Suspension auf die Innenwand des einen oder der mehreren Reaktorrohre und, optional, durch Auftragen der Suspension auf die Oberfläche von Füllkörpern des gegebenenfalls vorgesehenen Festbettes; durch Trocknen der aufgetragenen Suspension; und durch Tempern der aufgetragenen und getrockneten Suspension bei einer Temperatur im Bereich von 500 °C bis 1.500 °C unter Inertgas oder Wasserstoff. Die getemperten Füllkörper können dann in das eine oder die mehreren Reaktorrohre eingefüllt werden. Das Tempern und optional auch das vorherige Trocknen können aber auch bei bereits eingefüllten Füllkörpern erfolgen.

Als Suspensionsmittel gemäß Komponente b) der erfindungsgemäßen Suspension, d. h. Lack bzw. Paste, insbesondere solche Suspensionsmittel mit Bindecharakter (kurz auch als Bindemittel bezeichnet), können vorteilhaft thermoplastische polymere Acrylatharze verwendet werden, wie sie in der Farben- und Lackindustrie eingesetzt werden. Hierzu zählen beispielsweise Polymethylacrylat, Polyethylacrylat, Polypropylmethacrylat oder Polybutylacrylat. Es handelt sich um marktübliche Systeme, beispielsweise die unter dem Markennamen Degalan® von Evonik Industries erhältlich sind.

Optional können als weitere Komponenten, d. h. im Sinne von Komponente c), vorteilhaft ein oder mehrere Hilfsstoffe bzw. Hilfskomponenten eingesetzt werden.

So kann man als Hilfskomponente c) optional Löse- oder Verdünnungsmittel einsetzen. Vorzugsweise eignen sich organische Lösemittel, insbesondere aromatische Löse- bzw. Verdünnungsmittel, wie Toluol, Xylole, sowie Ketone, Aldehyde, Ester, Alkohole oder Gemische aus mindestens zwei der zuvor genannten Löse- bzw. Verdünnungsmittel.

Eine Stabilisierung der Suspension kann - sofern erforderlich - vorteilhaft durch anorganische oder organische Rheologieadditive erreicht werden. Zu den bevorzugten anorganischen Rheologieadditiven als Komponente c) zählen beispielsweise Kieselgur, Bentonite, Smektite und Attapulgite, synthetische Schichtsilikate, pyrogene Kieselsäure oder Fällungskieselsäure. Zu den organischen Rheologieadditiven bzw. Hilfskomponenten c) zählen vorzugsweise Rhizinusöl und dessen Derivate, wie polyamidmodifiziertes Rhizinusöl, Polyolefin oder polyolefin-modifiziertes Polyamid, sowie Polyamid und Derivate hiervon, wie sie beispielsweise unter dem Markennamen Luvotix® vertrieben werden, sowie Mischsysteme aus anorganischen und organischen Rheologieadditiven.

Um eine vorteilhafte Haftung zu erzielen, können als Hilfskomponenten c) auch geeignete Haftvermittler aus der Gruppe der Silane oder Siloxane eingesetzt werden. Hierzu sind beispielsweise - aber nicht ausschließlich - Dimethyl-, Diethyl-, Dipropyl-, Dibutyl-, Diphenylpolysiloxan oder Mischsysteme daraus, wie beispielsweise Phenylethyl- oder Phenylbutylsiloxane oder andere Mischsysteme, sowie Mixturen hiervon zu nennen.

Der erfindungsgemäße Lack bzw. die Paste können in vergleichsweise einfacher und wirtschaftlicher Weise zum Beispiel durch Mischen, Rühren bzw. Kneten der Einsatzstoffe, vgl. Komponenten a), b) und optional c), in entsprechenden, dem Fachmann an sich bekannten, gängigen Apparaten erhalten werden. Ferner wird auf die vorliegenden, erfindungsgemäßen Beispiele hingewiesen.

In dem erfindungsgemäßen Verfahren wird ein Hydrodechlorierungsreaktor als integraler Bestandteil einer Anlage zur Herstellung von Trichlorsilan aus metallurgischem Silicium eingesetzt, wobei der Hydrodechlorierungsreaktor unter Druck betrieben wird und ein oder mehrere Reaktorrohre umfasst, die aus keramischem Material bestehen.

Die Anlage zur Herstellung von Trichlorsilan, in der der Hydrodechlorierungsreaktor vorzugsweise verwendet werden kann, umfasst:
a) eine Teilanlage zur Umsetzung von Siliciumtetrachlorid mit Wasserstoff unter Bildung von Trichlorsilan umfassend:
   - einen in einem Heizraum oder einer Brennkammer angeordneten Hydrodechlorierungsreaktor, wobei die Anordnung bevorzugt ein oder mehrerer Reaktorrohre in einer Brennkammer umfasst;
   - zumindest eine Leitung für siliciumtetrachloridhaltiges Gas und zumindest eine Leitung für wasserstoffhaltiges Gas, die in den Hydrodechlorierungsreaktor bzw. die Anordnung ein oder mehrerer Reaktorrohre führen, wobei optional anstelle getrennter Leitungen eine gemeinsame Leitung für das siliciumtetrachloridhaltige Gas und das wasserstoffhaltige Gas vorgesehen ist;
   - eine aus dem Hydrodechlorierungsreaktor herausgeführte Leitung für ein trichlorsilanhaltiges und HCI-haltiges Produktgas;
   - einen Wärmetauscher, der bevorzugt ein Rohrbündelwärmetauscher ist, durch den die Produktgasleitung sowie zumindest die eine Siliciumtetrachlorid-Leitung und/oder die zumindest eine Wasserstoff-Leitung so geführt wird, dass ein Wärmeübertrag aus der Produktgasleitung in die zumindest eine Siliciumtetrachlorid-Leitung und/oder die zumindest eine Wasserstoff-Leitung möglich ist, wobei optional der Wärmetauscher Wärmetauscherelemente aus keramischem Material umfasst;
   - optional eine Teilanlage oder eine Anordnung umfassend mehrere Teilanlagen zum Abtrennen jeweils eines oder mehrerer Produkte umfassend Siliciumtetrachlorid, Trichlorsilan, Wasserstoff und HCl;
   - optional eine Leitung, die abgetrenntes Siliciumtetrachlorid in die Siliciumtetrachlorid-Leitung führt, vorzugsweise stromaufwärts vom Wärmetauscher;
   - optional eine Leitung über die abgetrenntes Trichlorsilan einer Endproduktentnahme zugeführt wird;
   - optional eine Leitung, die abgetrennten Wasserstoff in die Wasserstoff-Leitung führt, vorzugsweise stromaufwärts vom Wärmetauscher; und
   - optional eine Leitung über die abgetrenntes HCl einer Anlage zur Hydrochlorierung von Silicium zugeführt wird; und
b) eine Teilanlage zur Umsetzung von metallurgischem Silicium mit HCl unter Bildung von Siliciumtetrachlorid umfassend:
   - eine der Teilanlage zur Umsetzung von Siliciumtetrachlorid mit Wasserstoff vorgeschaltete Hydrochlorierungsanlage, wobei optional zumindest ein Teil des eingesetzten HCl via den HCl-Strom in die Hydrochlorierungsanlage geführt wird;
   - einen Kondensator zum Abtrennen zumindest eines Teils des Kopplungsprodukts Wasserstoff, der aus der Reaktion in der Hydrochlorierungsanlage stammt, wobei dieser Wasserstoff über die Wasserstoff-Leitung in den Hydrodechlorierungsreaktor bzw. die Anordnung ein oder mehrerer Reaktorrohre geführt wird;
   - eine Destillationsanlage zum Abtrennen von zumindest Siliciumtetrachlorid und Trichlorsilan aus dem übrigen Produktgemisch, welches aus der Reaktion in der Hydrochlorierungsanlage stammt, wobei das Siliciumtetrachlorid über die Siliciumtetrachlorid-Leitung in den Hydrodechlorierungsreaktor bzw. die Anordnung ein oder mehrerer Reaktorrohre geführt wird; und
   - optional einen Rekuperator zur Vorwärmung der für die Brennkammer vorgesehenen Brennluft mit dem aus der Brennkammer ausströmende Rauchgas; und
   - optional eine Anlage zur Dampferzeugung aus dem aus dem Rekuperator ausströmenden Rauchgas.

**Figur 1** zeigt beispielhaft und schematisch einen Hydrodechlorierungsreaktor, der erfindungsgemäß in einem Verfahren zur Umsetzung von Siliciumtetrachlorid mit Wasserstoff zu Trichlorsilan oder als integraler Bestandteil einer Anlage zur Herstellung von Trichlorsilan aus metallurgischem Silicium verwendet werden kann.

**Figur 2** zeigt beispielhaft und schematisch eine Anlage zur Herstellung von Trichlorsilan aus metallurgischem Silicium in der der erfindungsgemäße Hydrodechlorierungsreaktor verwendet werden kann.

Der in **Figur 1** gezeigte Hydrodechlorierungsreaktor umfasst mehrere in einer Brennkammer **15** angeordnete Reaktorrohre **3a, 3b, 3c,** einen gemeinsamen Eduktstrom **1,2,** der in die mehreren Reaktorrohre **3a, 3b, 3c** geführt wird sowie eine aus den mehreren Reaktorrohren **3a, 3b, 3c** herausgeführte Leitung **4** für einen Produktstrom. Der gezeigte Reaktor umfasst ferner eine Brennkammer **15** sowie eine Leitung für Brenngas **18** und eine Leitung für Brennluft **19,** die zu den vier gezeigten Brennern der Brennkammer **15** führen. Gezeigt ist schließlich noch eine aus der Brennkammer **15** herausführende Leitung für Rauchgas **20.**

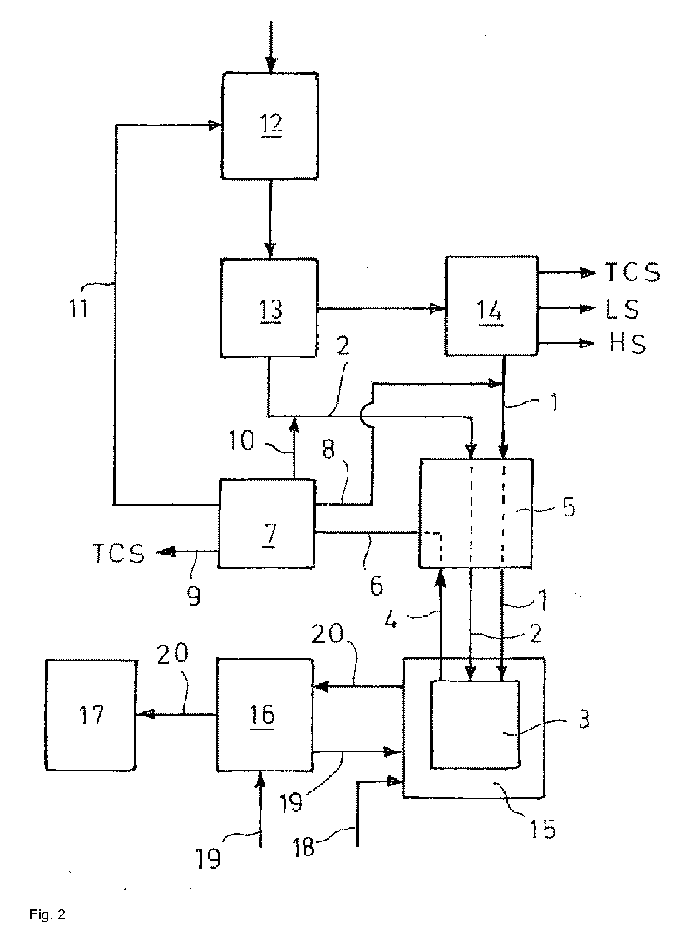

Die in **Figur 2** gezeigte Anlage umfasst einen in einer Brennkammer **15** angeordneten Hydrodechlorierungsreaktor **3,** der erfindungsgemäß ein oder mehrere Reaktorrohre **3a, 3b, 3c** (nicht gezeigt) umfassen kann. Die gezeigte Anlage umfasst eine Leitung **1** für siliciumtetrachloridhaltiges Gas und eine Leitung **2** für wasserstoffhaltiges Gas, die beide in den Hydrodechlorierungsreaktor **3** führen, eine aus dem Hydrodechlorierungsreaktor **3** herausgeführte Leitung **4** für ein trichlorsilanhaltiges und HCl-haltiges Produktgas, einen Wärmetauscher **5** durch den die Produktgasleitung **4** sowie die Siliciumtetrachlorid-Leitung **1** und die Wasserstoff-Leitung **2** geführt wird, so dass ein Wärmeübertrag aus der Produktgasleitung **4** in die Siliciumtetrachlorid-Leitung **1** und in die Wasserstoff-Leitung **2** möglich ist. Die Anlage umfasst ferner eine Teilanlage **7** zum Abtrennen von Siliciumtetrachlorid **8,** von Trichlorsilan **9,** von Wasserstoff **10** und von HCl **11**. Dabei wird das abgetrennte Siliciumtetrachlorid durch die Leitung **8** in die Siliciumtetrachlorid-Leitung 1 geführt, das abgetrennte Trichlorsilan durch die Leitung **9** einer Endproduktentnahme zugeführt, der abgetrennte Wasserstoff durch die Leitung **10** in die Wasserstoff-Leitung **2** geführt und das abgetrennte HCl durch die Leitung **11** einer Anlage **12** zur Hydrochlorierung von Silicium zugeführt. Die Anlage umfasst ferner einen Kondensator **13** zum Abtrennen des Kopplungsprodukts Wasserstoff, der aus der Reaktion in der Hydrochlorierungsanlage **12** stammt, wobei dieser Wasserstoff über die Wasserstoff-Leitung **2** via den Wärmetauscher **5** in den Hydrodechlorierungsreaktor **3** geführt wird. Gezeigt ist auch eine Destillationsanlage **14** zum Abtrennen von Siliciumtetrachlorid **1** und Trichlorsilan **(TCS)** sowie Leichtsiedern **(LS)** und Hochsiedern **(HS)** aus dem Produktgemisch, welches via den Kondensator **13** von der Hydrochlorierungsanlage **12** kommt. Die Anlage umfasst schließlich noch einen Rekuperator **16,** der die für die Brennkammer **15** vorgesehene Brennluft **19** mit dem aus der Brennkammer **15** ausströmende Rauchgas **20** vorwärmt sowie eine Anlage **17** zur Dampferzeugung mit Hilfe des aus dem aus dem Rekuperator **16** ausströmenden Rauchgases **20.**

### Bezugszeichenliste

- (1): siliciumtetrachloridhaltiger Eduktstrom
- (2): wasserstoffhaltiger Eduktstrom
- (1,2): gemeinsamer Eduktstrom
- (3): Hydrodechlorierungsreaktor
- (3a, 3b, 3c): Reaktorrohre
- (4): Produktstrom
- (5): Wärmetauscher
- (6): abgekühlter Produktstrom
- (7): nachgeschaltete Teilanlage
- (7a, 7b, 7c): Anordnung mehrerer Teilanlagen
- (8): in (7) oder (7a,7b,7c) abgetrennter Siliciumtetrachloridstrom
- (9): in (7) oder (7a,7b,7c) abgetrennter Endproduktstrom
- (10): in (7) oder (7a,7b,7c) abgetrennter Wasserstroffstrom
- (11): in (7) oder (7a,7b,7c) abgetrennter HCl-Strom
- (12): vorgeschaltetes Hydrochlorierungsverfahren bzw. -anlage
- (13): Kondensator
- (14): Destillationsanlage
- (15): Heizraum oder Brennkammer
- (16): Rekuperator
- (17): Anlage zur Dampferzeugung
- (18): Brenngas
- (19): Brennluft
- (20): Rauchgas

## Patentansprüche

1. Verfahren zur Umsetzung von Siliciumtetrachlorid mit Wasserstoff zu Trichlorsilan in einem Hydrodechlorierungsreaktor (3), wobei
der Hydrodechlorierungsreaktor (3) unter Druck betrieben wird und ein oder
mehrere Reaktorrohre (3a, 3b, 3c) umfasst, die aus keramischem Material bestehen, und
der wasserstoffhaltige Eduktstrom (2) am Eingang des Reaktors Chlorwasserstoff aufweist,
**dadurch gekennzeichnet,**
**dass**
in dem Reaktor (3) eine Temperatur von 700 bis 1000 °C bei einem Druck von 1 bis 10 bar eingestellt und
in dem Eduktstrom (2) Chlorwasserstoff in einem Anteil von 0,01 bis 5,0 Mol-% eingesetzt wird, wobei
der Anteil Chlorwasserstoff auf die Summe der Anteile Chlorwasserstoff und Wasserstoff im Eduktstrom (2) bezogen wird, die 100 Mol-% beträgt.

2. Verfahren nach Anspruch 1, **dadurch gekennzeichnet,**
**dass** das keramische Material ausgewählt ist aus Al₂O₃, AIN, Si₃N₄, SiCN oder SiC.

3. Verfahren nach Anspruch 2,
**dadurch gekennzeichnet,**
**dass** das keramische Material ausgewählt ist aus Si-infiltriertem SiC, isostatisch gepresstem SiC, heiß isostatisch gepresstem SiC oder drucklos gesintertem SiC (SSiC).

4. Verfahren nach Anspruch 1, wobei das wasserstoffhaltige Eduktgas (2) mit einem Druck im Bereich von 4 bis 6 bar, und
mit einer Temperatur im Bereich von 800 °C bis 950 °C, und mit einem Anteil Chlorwasserstoff im Bereich von 0,5 bis 1,0 Mol-%
in den Hydrodechlorierungsreaktor (3) geführt wird.
